# EUROPÄISCHE PATENTSCHRIFT

(11) **EP 2 680 968 B1**
(45) Veröffentlichungstag und Bekanntmachung des Hinweises auf die Patenterteilung: **08.04.2015**
(21) Anmeldenummer: 12709010.8
(22) Anmeldetag: 16.02.2012
(51) Int. Cl.: C01G 39/00, B01J 37/03, B01J 23/28, B01J 35/00, B01J 35/02, B01J 35/10, B82Y 30/00, C01B 3/04, C02F 1/72, C02F 1/32

(54) **FOTOKATALYSATOR AUF ZINNMOLYBDAT-BASIS SOWIE DESSEN HERSTELLUNG**
TIN-MOLYBDATE-BASED PHOTOCATALYST AND PRODUCTION THEREOF
PHOTOCATALYSEUR À BASE DE MOLYBDATE D'ÉTAIN ET SON MODE DE PRODUCTION

(30) Priorität: 03.03.2011 DE 102011012931
(43) Veröffentlichungstag der Anmeldung: 08.01.2014
(73) Patentinhaber: Karlsruher Institut für Technologie, 76131 Karlsruhe (DE)
(72) Erfinder: FELDMANN, Claus, 76275 Ettlingen (DE); UNGELENK, Jan, 76646 Bruschsal (DE)
(74) Vertreter: Müller-Boré & Partner Patentanwälte PartG mbB
(86) Internationale Anmeldenummer: PCT/EP2012/000687
(87) Internationale Veröffentlichungsnummer: WO 2012/116784

(56) Entgegenhaltungen:
- US-A- 4 171 405
- US-B1- 6 198 005
- LOCHAR V ET AL: "Mechanism of selective oxidation of methanol over stannic oxide-molybdenum oxide catalyst", APPLIED CATALYSIS A: GENERAL, ELSEVIER SCIENCE, AMSTERDAM, NL, Bd. 228, Nr. 1-2, 28. März 2002 (2002-03-28), Seiten 95-101, XP004343562, ISSN: 0926-860X, DOI: 10.1016/S0926-860X(01)00970-X
- AKIHIKO KUDO ET AL: "Heterogeneous photocatalyst materials for water splitting", CHEMICAL SOCIETY REVIEWS, Bd. 38, Nr. 1, 1. Januar 2009 (2009-01-01) , Seite 253, XP55026883, ISSN: 0306-0012, DOI: 10.1039/b800489g in der Anmeldung erwähnt

## Beschreibung

Die vorliegende Erfindung betrifft insbesondere die Verwendungen der ternären Oxidverbindung Sn₁₋ₓMoO₄ mit
0 ≤ x ≤ 0,4, welche Partikeldurchmesser von 2 bis 200 nm aufweist, als Fotokatalysator, insbesondere zur Wasserreinigung, einschließlich der Entfernung von Schmutz bzw. Flecken von Oberflächen wie z.B. Fassadenputz (Stichwort "Selbstreinigungseffekt"), sowie zur Wasserspaltung bzw. Wasserstoffgenerierung, sowie für photochrome bzw. elektrochrome Bauteile oder andere auf diesen Effekt basierende Bauteile, wobei die Farbe der Verbindung durch Lichteinwirkung und/oder durch Anlegen einer elektrischen Spannung verändert wird.

Zwei bedeutende Herausforderungen des 21. Jahrhunderts werden die Verknappung von Energierohstoffen und die Verknappung von Wasser sein. Grundsätzlich könnte die Fotokatalyse die Lösung für beide Probleme bieten. Diese oft als "grün" bezeichnete Technologie vermag nicht nur Wasser in die Elemente zu spalten und dabei den Energieträger Wasserstoff freizusetzen, sondern auch organische Schadstoffe abzubauen, und könnte so für die Wasserreinigung bzw. Abwasseraufbereitung genutzt werden.

Da sich Metalloxide leicht darstellen lassen und chemisch stabil sind, werden diese allgemein als zweckmäßigste Fotokatalysatoren angesehen. Das Paradebeispiel ist TiO₂, das nach wie vor höchste katalytische Wirksamkeit unter UV-Anregung zeigt. Auf der anderen Seite ist TiO₂ - genau wie andere binäre Metalloxide - angesichts seiner großen Bandlücke (3,2 eV) unter sichtbarem Licht praktisch inaktiv. Zweckdienlicher wäre ein Photokatalysator, der im solaren Spektrum arbeitet, das nur einen kleinen Anteil an UV-Licht enthält. Dies gilt nicht nur für Entwicklungsländer, in denen in großen Teilen die Sonne die einzige verfügbare Energiequelle ist, sondern auch für Industriestaaten, in denen ein solcher Fotokatalysator im Vergleich zu TiO₂ als Stand der Technik von großem ökonomischem Vorteil wäre.

Die Wasserspaltung unter sichtbarem Licht erfordert dabei eine hinreichend kleine Bandlücke einerseits und geeignete energetische Lagen der die Bandlücke begrenzenden Energieniveaus andererseits. So vermag ein Material nur dann fotokatalytisch Wasserstoff freizusetzen, wenn die Unterkante seines Leitungsbandes in Bezug auf die Normalwasserstoffelektrode negativ ist. Die Entwicklung von Sauerstoff erfordert hingegen, dass der Oberkante des Valenzbandes ein positiverer Wert als dem des Redoxpotentials von O₂/H₂O (1,23 V) zukommt. Letzteres legt somit zugleich die Mindestgröße für die Bandlücke fest. Entsprechend würde theoretisch IR-Strahlung von 1100 nm für die Wasserspaltung genügen.

Zur Erfüllung der Bedingung einer ausreichend kleinen Bandlücke hat es sich als zielführende Strategie herausgestellt, zu multinären Oxiden überzugehen. Durch Hybridisierung der Orbitale geeignet gewählter Elemente lässt sich gegenüber den entsprechenden, jeweiligen binären Oxiden eine Verengung der Bandlücke erreichen, so dass die resultierenden multinären fotokatalytischen Verbindungen signifikant auf sichtbares Licht ansprechen. Beispiele umfassen unter anderem CaBi₂O₄, BiSbO₄, Bi₂WO₆, BiVO₄ bzw. Ag₃PO₄. Die meisten bekannten Fotokatalysatoren mit hinreichend kleiner Bandlücke erfüllen aber nicht zugleich die zweite Bedingung, d.h. die begrenzenden Bandkanten weisen nicht die für die Wasserspaltung geeignete Energieniveau-Lage auf. Damit ist dann eine vollständige Spaltung von Wasser in die Elemente nicht mehr möglich; vgl. A. Kudo and Y. Miseki, Chem. Soc. Rev., 2009, 38, 253-278.

Aus diesem Grund sind für den Ablauf der Reaktion Opferreaktanden notwendig, z.B. Silbernitrat, welches im Falle von z.B. Bi₂WO₆, BiVO₄ und Ag₃PO₄ als Elektronenakzeptor fungiert und nur so die Freisetzung von Sauerstoff durch Wasseroxidation ermöglicht; vgl. Z. Yi, J. Ye, N. Kikugawa, T. Kako, S. Ouyang, H. Stuart-Williams, H. Yang, J. Cao, W. Luo, Z. Li, Y. Liu, and R. L. Withers, Nat. Mat., 2010, 9, 559-564.

Wird jedoch ein solcher Fotokatalysator elektrochemisch mit einem zweiten verschaltet, welcher unter Elektronenaufnahme nur für die Wasserstofffreisetzung geeignet ist, lässt sich ein solar aktiviertes Gesamtsystem für die vollständige Wasserspaltung realisieren, welches vollständig ohne Opferreaktanden auskommt. Ein solches Z-Schema folgt dem Vorbild der Natur, die für die Fotosynthese in entsprechender Weise ebenfalls zwei Fotosysteme verwendet. Die Trennung der Wasserspaltung in zwei Halbreaktionen bietet den Vorteil, dass sich letztere auch örtlich, z.B. durch Kompartimentierung, trennen lassen. Auf diese Weise kann die Rückreaktion, d.h. die Synthese von Wasser aus den Elementen, unterdrückt und so die Effizienz der Wasserspaltung verbessert werden. Die Nutzung von Z-Schemata gilt insofern als erfolgsversprechender Ansatz für die solar aktivierte fotokatalytische Wasserspaltung.

Die effiziente solar betriebene Wasserstoffgenerierung erfordert daher die Entwicklung geeigneter fotokatalytischer Materialien, die entweder für sich genommen effizient die Gesamtreaktion der Wasserspaltung unter dem solaren Spektrum ermöglichen, oder alternativ unter Elektronenaufnahme innerhalb eines solar aktivierten Z-Schemas effizient die Halbreaktion der Wasserstofffreisetzung betreiben.

Zhurnal Neorganicheskoi Khimii 31 (1986) 486, A. A. Ryabukha, V. P. Karlov, V. V. Petrochenko, G. N. Butuzov, offenbart eine Verbindung, die mit der Summenformel SnMoO₄ x 5CHOH(CH₂OH)₂ angegeben wird. In dieser Publikation wird explizit festgestellt, dass mit der beschriebenen Synthese alleinig diese einzige Verbindung erhalten werden kann. Die beschriebenen Analyse besagen zudem, dass das enthaltene Diethylenglykol essentiell bzw. konstituierend für die erhaltene Verbindung ist. Diese Verbindung ist farblos bis dunkelbraun und damit für die Fotokatalyse uninteressant, da die Lichtabsorption in einem nicht geeigneten spektralen Bereich erfolgt.

US 4,171,405 offenbart zwar die Zusammensetzung SnMoO₄ neben vielen weiteren Molybdaten. Es wird darin auf eine verringerte Hämolyse von Molybdatmodifizierten Asbestfasern gegenüber unmodifizierten Asbestfasern abgestellt. Nanopartikel solcher Molybdate werden jedoch in keinster Weise beschrieben. Das offenbarte SnMoO₄ ist vielmehr Bulk- bzw. Volumenfaser als entsprechendes Nanomaterial. In US 6,198,005 wird zwar ebenfalls neben vielen weiteren Molybdaten die Verbindung SnMoO₄ offenbart. Nanopartikel werden darin nicht beschrieben. Vielmehr werden die verwendeten Oxidationskatalysatoren zwischen 400 und 700°C gesintert, so dass danach Bulk/Volumenmaterial vorliegt. Des weiteren wird darin auf die "klassische" Oxidationskatalyse von Methanol zu Ameisensäure bzw. CO₂ im Abgasstrom einer Zellstoff-Fabrik abgestellt. Lochar et al., Applied Catalysis A 2002, 228, 95, beschreibt ein SnO₂-MoO₃ Mischoxid. Das Produkt der wässrigen Fällung wird bei 500°C gesintert. Diese Entmischung in SnO₂ und MoO₃ ist auf die hohe Temperatur des Sinterns zurückzuführen. Es wird darin auf Bulkmaterial abgestellt, aber nicht auf Nanopartikel. Kudo et al., Chem. Soc. Rev. 2009, 38, 253, beschreibt heterogene Fotokatalysatormaterialien zur Wasserspaltung.

Der vorliegenden Erfindung liegt somit die Aufgabe zugrunde, ein neues Fotokatalysatormaterial bereitzustellen, das befähigt ist, die Wasserspaltung insbesondere auch unter sichtbarem Licht zu ermöglichen, d.h. ein Fotokatalysatormaterial bereitzustellen, das insbesondere auch im solaren Spektrum arbeitet und dabei Wasserstoff generiert.

Diese Aufgabe wird durch die in den Ansprüchen gekennzeichneten Ausführungsformen der vorliegenden Erfindung gelöst.

Insbesondere wird gemäß der vorliegenden Erfindung die Verwendung der ternären Oxidverbindung Sn₁₋ₓMoO₄ mit 0 ≤ x ≤ 0,4, welche Partikeldurchmesser von 2 bis 200 nm aufweist, als Fotokatalysator bereitgestellt. Die erfindungsgemäß verwendete ternäre Oxidverbindung liegt als reiner Feststoff vor, d.h. ohne dass Moleküle organischer Lösungsmittel, wie beispielsweise, Methanol, Ethanol, Diethylether, THF, Diethylenglykol, etc., im Festkörper eingeschlossen oder koordiniert sind. Allenfalls Wassermoleküle können in der erfindungsgemäßen ternären Oxidverbindung gegebenenfalls vorliegen.

Das Vorkommen von Zinn(II)molybdat, Sn(II)MoO₄, als eigenständige Phase, d.h. ohne Nebenphasen oder Fremdphasen, ist bisher nicht belegt. Während Me₂Sn(IV)MoO₄ beschrieben wurde, gilt das mögliche Auftreten von SnMoO₄ als Nebenphase in MoO₃ als spekulativ; vgl. T. Wenig and Eduardo E. Wolf, Appl. Catal., A, 1993, 96(2), 383-396. In einer anderen Arbeit wurde SnMoO₄ als Nebenphase in SnO beschrieben, nämlich innerhalb von SnMoO₄-SnO₂-Festkörperkompositen; vgl. A.M. Edwiin Suresh Raj, C. Mallika, O.M. Sreedharan, and K.S. Nagaraja, Mater. Res. Bull., 2001, 36(5-6), 837-845.

Sn(II)MoO₄ isoliert und ohne Nebenphasen bzw. Fremdphasen lässt sich mit konventionellen festkörperchemischen Methoden nicht darstellen, da es zu internen Redoxreaktionen kommt, die in Sn(IV)O₂ und Mo(IV)O₂ münden; vgl. W. Jeitschko and A.W. Sleight, Acta. Cryst., 1974, B30, 2088.

Erfindungsgemäß wurde überraschenderweise festgestellt, dass sich das ternäre Oxid Sn₁₋ₓMoO₄ ohne Fremdphasen bzw. Nebenphasen sowie ohne Lösungsmittel-Koordination oder Lösungsmittel-Einschluß in äußerst einfacher Weise mittels einer Templat-freien Synthese bei Raumtemperatur herstellen läßt. Durch Fällung bei Raumtemperatur in wässriger Phase, ausgehend von jeweils wässrigen oder alkoholischen Lösungen von Sn(II)-Ionen, beispielsweise als Halogenidsalz oder Nitratsalz, bzw. von MoO₄²⁻ Ionen oder anderen ionischen Molybdat-Quellen wie z.B. [Mo₇O₂₄]⁶⁻, beispielsweise als Alkalimetallsalz oder Ammoniumsalz, vorzugsweise ausgehend von Lösungen von SnCl₂ und Na₂MoO₄ ·2H₂O, können nicht-agglomerierte, redispergierbare, tiefblaue SnMoO₄-Nanopartikel erhalten werden, die eine hohe spezifische Oberfläche aufweisen. Unter Einwirkung von Licht wandeln sich die tiefblauen Sn₁₋ₓMoO₄-Nanopartikel reversibel in hellgelbe Sn₁₋ₓMoO₄-Nanopartikel um, die sich nach Beendigung der direkten Belichtung wiederum zu tiefblauen Sn₁₋ₓMoO₄-Nanopartikel umwandeln. Eine Erklärung hierfür - ohne daran gebunden zu sein - könnte sein, dass sich, bedingt durch partielle Reduktion von Mo, gegebenenfalls unter Aufnahme von Kationen zum Ladungsausgleich, wie z.B. H⁺, Li⁺, Na⁺ oder K⁺, das ternäre Oxid Sn₁₋ₓMoO₄ dabei reversibel in eine derartige gelbe bzw. blaue Form umwandelt. Die erfindungsgemäß verwendete Verbindung Sn₁₋ₓMoO₄ (0 ≤ x ≤ 0,4, vorzugsweise 0 ≤ x ≤ 0,1) weist eine Bandlücke von 1,0-3,0 eV auf, abhängig insbesondere von dem Wert von x, der Form und einer gegebenenfalls vorgenommenen Dotierung.

In einer Ausführungsform der vorliegenden Erfindung liegt das ternäre Oxid in stöchiometrischer Form vor, d.h. x = 0. Die erfindungsgemäß verwendete Verbindung SnMoO₄ (x = 0) in der gelben Form weist eine optische Bandlücke von zwischen 2,1 und 3,0 eV auf. Diese Verbindung unterscheidet sich von der in Zhurnal Neorganicheskoi Khimii 31 (1986) 486, A. A. Ryabukha, V. P. Karlov, V. V. Petrochenko, G. N. Butuzov, offenbarten Verbindung, die mit der Summenformel SnMoO₄ x 5CHOH(CH₂OH)₂ angegeben ist, nicht nur schon in der Farbe, sondern dadurch, dass sie als reiner Feststoff vorliegt, d.h. ohne dass Moleküle organischer Lösungsmittel wie Diethylenglykol eingeschlossen oder koordiniert sind. Wie bereits eingangs ausgeführt ist diese mit SnMoO₄ x 5CHOH(CH₂OH)₂ angegebene, farblos bis dunkelbraune Verbindung als Fotokatalysator ungeeignet.

In einer anderen Ausführungsform der vorliegenden Erfindung liegt das ternäre Oxid in substöchiometrischer Form vor. Im Falle der Substöchiometrie, d.h. (0 < x), liegt eine Unterbesetzung des Sn-Platzes vor. Ein Teil der Sn-Plätze ist dann mit Sn⁴⁺ anstelle von Sn²⁺ besetzt.

Die erfindungsgemäß verwendete Verbindung Sn₁₋ₓMoO₄ mit 0 ≤ x ≤ 0,4 zeigt eine sehr hohe fotokatalytische Aktivität bei Bestrahlung mit sichtbarem Licht, insbesondere im Vergleich zu TiO₂ oder BiVO₄. Die fotokatalytische Aktivität bezieht sich dabei auf die Wasserreinigung wie auf die Wasserspaltung und Wasserstoffgenerierung.

In einer Ausführungsform der vorliegenden Erfindung ist 0 ≤ x ≤ 0,2, vorzugsweise 0 ≤ x ≤ 0,1.

Vorzugsweise liegt Sn₁₋ₓMoO₄ (0 ≤ x ≤ 0,4) in kristalliner Form vor. Das ternäre Oxid kann aber auch in teilkristalliner Form oder röntgenamorph vorliegen. Gemäß der vorliegenden Erfindung liegt Sn₁₋ₓMoO₄ (0 ≤ x ≤ 0,4) in nanoskaliger Form mit Partikeldurchmesser von 2 bis 200 nm, vorzugsweise Partikeldurchmesser von 5 bis 50 nm, besonders bevorzugt Partikeldurchmesser von 15 bis 20 nm vor, gemessen mittels dynamischer Lichtstreuung unter Verwendung von Polystyrol-Küvetten (Nanosizer ZS von Malvern Instruments). Aufgrund seiner Partikelgröße weist Sn₁₋ₓMoO₄ (0 ≤ x ≤ 0,4) eine sehr hohe spezifische Oberfläche im Bereich von 10 bis 200 m²/g, vorzugsweise 50 bis 80 m²/g auf, gemessen mittels BET-Isotherme unter N₂-Adsorption.

Die Nanopartikel werden in wässriger Lösung hergestellt, sind in Wasser sehr gut dispergierbar und weisen einen isoelektrischen Punkt von, falls vorhanden, kleiner pH 2 auf. Aufgrund einer hohen Ladungsstabilisierung in Folge von spontaner Deprotonierung dissoziierbarer, funktioneller Gruppen an der Partikeloberfläche (insbesondere dissoziierter Hydroxyfunktionen) zeigen die Nanopartikel über einen weiten pH-Bereich (3,5 bis 9,5) ein negatives Zeta-Potential ζ von zwischen -40 und -50 mV.

Der Fotokatalysator kann dabei insbesondere zur Spaltung von Wasser bzw. Wasserstoffgenerierung, d.h. Freisetzung von Wasserstoff, aber auch zur Wasserreinigung, einschließlich der Entfernung von Schmutz bzw. Flecken von Oberflächen wie z.B. Fassadenputz (Stichwort "Selbstreinigungseffekt"), vorzugsweise unter Bestrahlung mit Tageslicht, eingesetzt werden. Die Verwendung zur Wasserreinigung schließt die fotokatalytische Reinigung von Abwässern bzw. die Aufbereitung von Trinkwasser, d.h. die Zersetzung von im Wasser gelösten organischen Verunreinigungen aus Industrieabwässern bzw. Verunreinigungen mit Farbstoffen, Pestiziden, Fungiziden, Insektiziden, Düngemitteln, Verunreinigungen mit bakteriellen Keimen oder Pilzen, etc., ein. Der Fotokatalysator kann für die Fotokatalyse auch in Gemischen mit anderen Substanzen oder als Beschichtung auf einem Substrat (z.B. Metallelektrode, Glas) vorliegen. Auch kann hierfür eine Dotierung mit weiteren Metallkationen oder Chalkogenid- oder Halogenidanionen vorgesehen werden. Im Falle einer solchen Dotierung können beispielsweise einwertige Kationen wie Li⁺, Na⁺, K⁺, Rb⁺, Cs⁺, Cu⁺, Ag⁺, Au⁺, Ga⁺ oder In⁺ auf dem Sn²⁺-Gitterplatz vorliegen. Zweiwertige Kationen auf dem Sn²⁺-Gitterplatz können Mg²⁺, Ca²⁺, Sr²⁺, Ba²⁺, Mn²⁺, Fe²⁺, Co²⁺, Ni²⁺, Pd²⁺, Pt²⁺, Ge²⁺, Pb²⁺ bzw. Eu²⁺ sein. Dreiwertige Kationen auf dem Sn²⁺-Gitterplatz können V³⁺, Cr³⁺, Fe³⁺, Co³⁺, Al³⁺, Ga³⁺, In³⁺, As³⁺, Sb³⁺ bzw. Bi³⁺ sein. Auch ein partieller Austausch von Mo gegen Ti, Zr, Cr, W, Re, Si oder P ist dotierungsweise möglich. Eine derartige Dotierung kann im Bereich von 0,1 bis 40 Atom-%, bezogen auf das Gewicht der ternären Oxidverbindung Sn₁₋ₓMoO₄, vorzugsweise 0,1 bis 5 Atom-% liegen.

Die fotokatalytische Aktivität von Sn₁₋ₓMoO₄ (0 ≤ x ≤ 0,4) unter Bestrahlung mit Tageslicht ist deutlich höher als im Vergleich zu TiO₂-Anatas, welches der im Stand der Technik üblicherweise eingesetzte Fotokatalysator ist, sowie im Vergleich zu BiVO₄, welches zudem den Nachteil beinhaltet, dass Vanadate als toxisch bzw. cancerogen gelten. Als Referenz ist der Abbau von Methylenblau durch Sn₁₋ₓMoO₄ (0 ≤ x ≤ 0,4) 5 bis 30 mal schneller als im Falle von Anatas. Bevorzugt findet die fotokatalytische Reaktion dabei in neutralem Wasser unter Tageslichtbestrahlung statt. Die fotokatalytische Reaktion kann aber auch in anderen Lösungsmitteln, bei anderen pH-Werten und bei anderen Wellenlängen (z.B. UV-Licht) stattfinden. Die fotokatalytische Reaktion kann sich ebenfalls auf andere Moleküle als Methylenblau sowie auch auf einen Abbau von Zellen, Bakterien oder anderen Keimen und Krankheitserregern beziehen.

Insbesondere kann die fotokatalytische Aktivität von Sn₁₋ₓMoO₄ (0 ≤ x ≤ 0,4) zur Spaltung von Wasser bzw. zur Freisetzung von Wasserstoff aus Wasser (Wasserstoffgenerierung) unter Bestrahlung mit Tageslicht eingesetzt werden. Bevorzugt findet die fotokatalytische Wasserspaltung bzw. Wasserstoffgenerierung in neutralem Wasser unter Tageslichtbestrahlung statt. Die fotokatalytische Wasserspaltung bzw. Wasserstoffgenerierung kann aber auch in Gemischen mit anderen Lösungsmitteln, bei anderen pH-Werten und bei anderen Wellenlängen (z.B. UV-Licht) stattfinden. Die fotokatalytische Reaktion bezieht sich bevorzugt auf die Entwicklung von Wasserstoff, kann aber auch spezifisch auf die Sauerstofferzeugung abzielen.

Des Weiteren kann die fotokatalytische Aktivität von Sn₁₋ₓMoO₄ (0 ≤ x ≤ 0,4) zur Durchführung chemischer Reaktionen genutzt werden. Bevorzugt findet dabei die fotokatalytische Reaktion in neutralem Wasser unter Tageslichtbestrahlung statt. Die fotokatalytische Reaktion kann aber auch in anderen Lösungsmitteln, bei anderen pH-Werten und bei anderen Wellenlängen (z.B. UV-Licht) stattfinden. Bevorzugt bezieht sich die fotokatalytische Reaktion auf eine organischchemische Reaktion.

Die fotokatalytische Aktivität von Sn₁₋ₓMoO₄ (0 ≤ x ≤ 0,4) kann zudem auch zur Kombination mit einem anderen fotokatalytisch aktiven Material oder einer elektrochemischen Halbzelle unter Nutzung der Wasserspaltung bzw. Wasserstoffgenerierung und Ladungsträgergenerierung zur Umwandlung in elektrische Energie eingesetzt werden.

Schließlich kann auch die Farbumwandlung des erfindungsgemäßen ternären Oxids von blau nach gelb und/oder umgekehrt durch Lichteinstrahlung, bevorzugt Tageslicht, und/oder durch Anlegen einer elektrischen Spannung für photochrome bzw. elektrochrome Bauteile oder andere auf diesen Effekt basierende Bauteile genutzt werden.

Schließlich kann auch die Farbumwandlung des erfindungsgemäßen ternären Oxids von blau nach gelb und/oder umgekehrt durch Lichteinstrahlung, bevorzugt Tageslicht, und/oder durch Anlegen einer elektrischen Spannung für photochrome bzw. elektrochrome Bauteile oder andere auf diesen Effekt basierende Bauteile genutzt werden.

Ein weiterer Gegenstand der vorliegenden Erfindung betrifft die ternäre Oxidverbindung Sn₁₋ₓMoO₄ mit 0 ≤ x ≤ 0,4, welche frei von Fremdphasen und eingeschlossenen oder koordinierten organischen Lösungsmitteln ist und Partikeldurchmesser von 2 bis 200 nm aufweist, wobei die Nanopartikel über einen pH-Bereich von 3,5 bis 9,5 ein negatives Zeta-Potential ζ von zwischen -40 und -50 mV aufweisen, erhältlich durch Fällung bei Raumtemperatur in wässriger Phase, ausgehend von jeweils wässrigen oder alkoholischen Lösungen von Sn(II)-Ionen bzw. MoO₄²-Ionen.

Die vorliegende Erfindung wird anhand der folgenden, nicht-einschränkenden Beispiele näher erläutert.

### Synthese

SnMoO₄-Nanopartikel wurden über eine Fällungsreaktion unter Nutzung elektrostatischer Stabilisierung synthetisiert. In einem typischen Fall wurden 0,33 mmol SnCl₂ in 10 mL salzsaurem Ethanol gelöst. Unter heftigem magnetischem Rühren wurde diese Lösung bei Raumtemperatur zu 50 mL einer äquimolaren wässrigen Lösung von Na₂MoO₄ · 2H₂O gegeben. Alternativ wurden für beide Edukte wässrige, höher konzentrierte Lösungen verwendet, wobei die maximal verwendeten Konzentrationen bei 1 M lagen. In jedem Fall wurde die sofortige Fällung eines kräftig blauen Feststoffs beobachtet. Der Niederschlag wurde durch Zentrifugation (15 min, 25,000 Upm) abgetrennt, und mehrfach in destilliertem Wasser redispergiert und erneut abzentrifugiert. Pulvermaterial wurde durch Zentrifugation und Trocknen an Raumluft erhalten. Nachfolgend wurde das Pulver bei Raumtemperatur im Vakuum getrocknet, um verbliebene flüchtige Adsorbate zu entfernen.

### Fotokatalytische Tests

Die fotokatalytische Aktivität wurde durch die Freisetzung von Wasserstoff in Gegenwart von Ethanol als Elektronendonator unter simuliertem Tageslicht unter

Nutzung einer OSRAM XENOPHOT HLX 64634 Halogen Lampe (3300 K) bestimmt. Der Nachweis des gebildeten Wasserstoffs erfolgte über einen H₂-Gassensor.

## Patentansprüche

1. Verwendung der ternären Oxidverbindung Sn₁₋ₓMoO₄ mit 0 ≤ x ≤ 0,4, welche Partikeldurchmesser von 2 bis 200 nm aufweist, als Fotokatalysator.

2. Verwendung gemäß Anspruch 1, wobei der Fotokatalysator zur Spaltung von Wasser oder zur Wasserstoffgenerierung unter Bestrahlung mit Tageslicht eingesetzt wird.

3. Verwendung gemäß Anspruch 1, wobei der Fotokatalysator zur Entfernung von Schmutz bzw. Flecken von Oberflächen, einschließlich Fassadenputz, eingesetzt wird.

4. Verwendung gemäß Anspruch 1, wobei der Fotokatalysator zur Wasserreinigung, einschließlich der fotokatalytischen Reinigung von Abwässern bzw. der Aufbereitung von Trinkwasser, eingesetzt wird.

5. Verwendung der ternären Oxidverbindung Sn₁₋ₓMoO₄ mit 0 ≤ x ≤ 0,4, welche Partikeldurchmesser von 2 bis 200 nm aufweist, für photochrome bzw. elektrochrome Bauteile oder andere auf diesen Effekt basierende Bauteile, wobei die Farbe der Verbindung durch Lichteinwirkung und/oder durch Anlegen einer elektrischen Spannung verändert wird.

6. Verwendung gemäß einem der Ansprüche 1 bis 5, wobei die ternäre Oxidverbindung eine Bandlücke im Bereich von zwischen 1,0 bis 3,0 eV aufweist.

7. Verwendung gemäß einem der Ansprüche 1 bis 6,, wobei 0 ≤ x ≤ 0,2, vorzugsweise 0 ≤ x ≤ 0,1.

8. Verwendung gemäß einem der Ansprüche 1 bis 7, wobei die ternäre Oxidverbindung SnMoO₄ (x=0) ist.

9. Verwendung gemäß einem der Ansprüche 1 bis 8, wobei die ternäre Oxidverbindung in kristalliner Form vorliegt.

10. Verwendung gemäß einem der Ansprüche 1 bis 9, wobei die ternäre Oxidverbindung in einer gelben oder einer blauen Form vorliegt.

11. Verwendung gemäß einem der Ansprüche 1 bis 10, wobei die ternäre Oxidverbindung Partikeldurchmesser von 5 bis 50 nm, besonders bevorzugt Partikeldurchmesser von 15 bis 20 nm aufweist.

12. Verwendung gemäß einem der Ansprüche 1 bis 11, wobei die ternäre Oxidverbindung eine spezifische Oberfläche im Bereich von 10 bis 200 m²/g, vorzugsweise 50 bis 80 m²/g aufweist.

13. Ternäre Oxidverbindung Sn₁₋ₓMoO₄ mit 0 ≤ x ≤ 0,4, welche frei von Fremdphasen und eingeschlossenen oder koordinierten organischen Lösungsmitteln ist und Partikeldurchmesser von 2 bis 200 nm aufweist, wobei die Nanopartikel über einen pH-Bereich von 3,5 bis 9,5 ein negatives Zeta-Potential ζ von zwischen -40 und -50 mV aufweisen, erhältlich durch Fällung bei Raumtemperatur in wässriger Phase, ausgehend von jeweils wässrigen oder alkoholischen Lösungen von Sn(II)-Ionen bzw. MoO₄²⁻ Ionen.

## Claims

1. Use of the ternary oxide compound Sn₁₋ₓMoO₄ with 0 ≤ x ≤ 0.4 having a particle diameter of 2 to 200 nm as photocatalyst.

2. The use according to claim 1 wherein the photocatalyst is used for water splitting or hydrogen generation by means of radiation with daylight.

3. The use according to claim 1 wherein the photocatalyst is used for removing dirt or stains from surfaces, including facade plaster.

4. The use according to claim 1 wherein the photocatalyst is used for water purification including the photocatalytic purification of waste water or drinking water treatment.

5. Use of the ternary oxide compound Sn₁₋ₓMoO₄ with 0 ≤ x ≤ 0.4 having particle diameters of 2 to 200 nm for photochromic or electrochromic components or other components based on this effect, wherein the color of the compound is changed by exposure to light and/or applying an electrical voltage.

6. The use according to any one of claims 1 to 5 wherein the ternary oxide compound has a band gap in the range of between 1.0 to 3.0 eV.

7. The use according to any one of claims 1 to 6 wherein 0 ≤ x ≤ 0.2, preferably 0 ≤ x ≤ 0.1.

8. The use according to any one of claims 1 to 7 wherein the ternary oxide compound is SnMoO₄ (x=0).

9. The use according to any one of claims 1 to 8 wherein the ternary oxide compound is present in crystalline form.

10. The use according to any one of claims 1 to 9 wherein the ternary oxide compound is present in a yellow or in a blue form.

11. The use according to any one of claims 1 to 10 wherein the ternary oxide compound has particle diameters or 5 to 50 nm, in particular particle diameters of 15 to 20 nm.

12. The use according to any one of claims 1 to 11 wherein the ternary oxide compound has a specific surface in the range of 10 to 200 m²/g, particularly 50 to 80 m²/g.

13. Ternary oxide compound Sn₁₋ₓMoO₄ with 0 ≤ x ≤ 0.4 which is free of impurity phases and entrapped or coordinated organic solvents and has particle diameters of 2 to 200 nm wherein the nanoparticles have a negative zeta-potential ζ of between -40 and -50 mV over the pH range of 3.5 to 9.5, obtainable by precipitation at room temperature in aqueous phase, starting from aqueous or alcoholic solutions of Sn(II)ions and MoO₄²⁻ ions, respectively.

## Revendications

1. Utilisation du composé d'oxyde ternaire Sn₁₋ₓMoO₄ où 0 ≤ x ≤ 0,4, qui présente des diamètres de particules de 2 à 200 nm, comme photocatalyseur.

2. Utilisation selon la revendication 1, dans laquelle le photocatalyseur est utilisé pour la décomposition de l'eau ou pour la génération d'hydrogène sous un rayonnement à la lumière du jour.

3. Utilisation selon la revendication 1, dans laquelle le photocatalyseur est utilisé pour l'élimination de saletés ou de taches de surface, comprenant les enduits de façade.

4. Utilisation selon la revendication 1, dans laquelle le photocatalyseur est utilisé pour l'épuration des eaux, comprenant l'épuration photocatalytique des eaux usées ou le traitement de l'eau potable.

5. Utilisation du composé d'oxyde ternaire Sn₁₋ₓMoO₄ où 0 ≤ x ≤ 0, 4, qui présente des diamètres de particules de 2 à 200 nm, pour des composants photochromes ou électrochromes ou autres composants se basant sur cet effet, dans laquelle la couleur du composé est modifiée sous l'effet de la lumière et/ou par l'application d'une tension électrique.

6. Utilisation selon l'une des revendications 1 à 5, dans laquelle le composé d'oxyde ternaire présente une largeur de bande dans la plage comprise entre 1,0 et 3,0 eV.

7. Utilisation selon l'une des revendications 1 à 6, dans laquelle 0 ≤ x ≤ 0,2, de préférence, 0 ≤ x ≤ 0,1.

8. Utilisation selon l'une des revendications 1 à 7, dans laquelle le composé d'oxyde ternaire est SnMoO₄ (x = 0).

9. Utilisation selon l'une des revendications 1 à 8, dans laquelle le composé d'oxyde ternaire se présente sous forme cristalline.

10. Utilisation selon l'une des revendications 1 à 9, dans laquelle le composé d'oxyde ternaire se présente sous une forme jaune ou une forme bleue.

11. Utilisation selon l'une des revendications 1 à 10, dans laquelle le composé d'oxyde ternaire présente des diamètres de particules de 5 à 50 nm, de manière particulièrement préférée, des diamètres de particules de 15 à 20 nm.

12. Utilisation selon l'une des revendications 1 à 11, dans laquelle le composé d'oxyde ternaire présente une surface spécifique dans la plage de 10 à 200 m²/g, de préférence, de 50 à 80 m²/g.

13. Composé d'oxyde ternaire Sn_{1-X}MoO₄ où 0 ≤ x ≤ 0,4, qui est dépourvu de phases étrangères et de solvants organiques intégrés ou coordonnés et présente des diamètres de particules de 2 à 200 nm, dans lequel les nanoparticules présentent sur une plage de pH de 3,5 à 9,5 un potentiel-zêta ζ négatif entre -40 et -50 mV, pouvant être obtenu par une précipitation à température ambiante dans une phase aqueuse, respectivement à partir de solutions aqueuses ou alcooliques d'ions Sn(II) ou d'ions MoO₄²⁻.
